(19) Europäisches Patentamt
European Patent Office
Office européen des brevets

(11) **EP 3 809 582 B1**

(12) **EUROPEAN PATENT SPECIFICATION**

(45) Date of publication and mention of the grant of the patent:
**06.11.2024 Bulletin 2024/45**

(21) Application number: **19818636.3**

(22) Date of filing: **12.03.2019**

(51) International Patent Classification (IPC):
*H02P 21/14* (2016.01)    *H02P 21/22* (2016.01)
*H02P 29/62* (2016.01)

(52) Cooperative Patent Classification (CPC):
**H02P 21/141; H02P 21/14; H02P 29/662**

(86) International application number:
**PCT/JP2019/009872**

(87) International publication number:
**WO 2019/239657 (19.12.2019 Gazette 2019/51)**

(54) **DRIVING DEVICE, DRIVING SYSTEM, AND DRIVING METHOD FOR PERMANENT MAGNET SYNCHRONOUS MOTOR**

ANTRIEBSVORRICHTUNG, ANTRIEBSSYSTEM UND ANTRIEBSVERFAHREN FÜR EINEN PERMANENTMAGNETSYNCHRONMOTOR

DISPOSITIF D'ENTRAÎNEMENT, SYSTÈME D'ENTRAÎNEMENT, ET PROCÉDÉ D'ENTRAÎNEMENT POUR MOTEUR SYNCHRONE À AIMANTS PERMANENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2018 JP 2018111953**

(43) Date of publication of application:
**21.04.2021 Bulletin 2021/16**

(73) Proprietor: **Hitachi, Ltd.**
**Tokyo 100-8280 (JP)**

(72) Inventors:
• **KUNIHIRO, Naoki**
**Tokyo 100-8280 (JP)**
• **SHINOMIYA, Takeshi**
**Tokyo 100-8280 (JP)**
• **OTSUKA, Kuniaki**
**Tokyo 100-8280 (JP)**
• **SAKAI, Toshifumi**
**Tokyo 100-8280 (JP)**
• **ISHIKAWA, Katsumi**
**Tokyo 100-8280 (JP)**

(74) Representative: **Mewburn Ellis LLP**
**Aurora Building**
**Counterslip**
**Bristol BS1 6BX (GB)**

(56) References cited:
EP-A1- 2 472 716       EP-A2- 2 645 562
WO-A1-2014/174682      JP-A- 2017 028 804
US-A1- 2011 144 843    US-A1- 2017 302 205
US-A1- 2018 083 566

EP 3 809 582 B1

**Description**

Technical Field

The present invention relates to a driving device, a driving system, and a driving method for a permanent magnet synchronous motor, and are particularly suitable for railway vehicles.

Background Art

In the driving device for a motor for railway vehicles, vector control that can achieve high response and high accuracy for torque control is widely spread. Nowadays, or the purpose of achieving a reduction in size and high efficiency in driving systems for railway vehicles, application of permanent magnet synchronous motors is advancing.

In the vector control of the permanent magnet synchronous motor, the direction of the magnetic flux of the magnetic pole produced by a permanent magnet provided on the rotor of the permanent magnet synchronous motor is defined as a d-axis, and a direction at right angles to the d-axis is defined as a q-axis, and the voltage, the electric current, and the magnetic flux are handled on a orthogonal coordinate system in synchronous rotation with the magnet magnetic flux. Voltages are applied to the d-axis and the q-axis in control of a predetermined amplitude and a predetermined phase such that an electric current and a magnetic flux for outputting a target torque are achieved, and thus the torque of the permanent magnet synchronous motor is freely controlled.

The torque of the permanent magnet synchronous motor is expressed from Equation (1), and is formed of magnet torque in the first term Equation (1), the magnet torque being generated by the suction and the repulsion between the magnetic pole due to the rotating magnetic field of the stator and the magnetic pole of the permanent magnet of the rotor, and reluctance torque in the second term of Equation (1), the reluctance torque being generated by suction force between the magnetic pole due to the rotating magnetic field of the stator and the magnetic salient pole of the rotor.

[Eq. 1]

$$T_m = m \cdot P_m \cdot K_e \cdot i_q + m \cdot P_m \cdot (L_d - L_q) \cdot i_d \cdot i_q$$

$$(1)$$

Here, m is a source resultant pulse number, $P_m$ is a pole logarithm, $K_e$ is a magnet magnetic flux (power generation constant), $i_d$ is a d-axis current, $i_q$ is a q-axis current, $L_d$ is a d-axis inductance, and $L_q$ is a q-axis inductance.

The magnet magnetic flux $K_e$ that forms the magnetic pole of the permanent magnet of the magnet torque has a property that a magnetic flux quantity changes as well in association with a change in magnet temperatures due to a change in outside air temperatures or due to the influence of heat generation caused by losses, such as a copper loss and an iron loss, which occur in driving the permanent magnet synchronous motor.

In the case in which the permanent magnet synchronous motor is drive-controlled by a torque-control type driving device, when a difference occurs between a set value $K_e$* of the constant of the magnet magnetic flux set in a controller included in the driving device and the actual magnet magnetic flux $K_e$ of the permanent magnet synchronous motor, errors occur in the magnet magnetic flux, resulting in the occurrence of a problem that the accuracy of magnet torque is degraded.

Therefore, in order to solve the degradation of the accuracy of torque due to fluctuations in the magnetic flux quantity of the permanent magnet, a technique of estimating a magnet magnetic flux or a magnet temperature is proposed.

In Patent Literature 1, a technique is proposed in which in the free run state of a permanent magnet synchronous motor, a driving device, such as an inverter, is stopped, an induced voltage E0 and a number of revolutions ω are measured, and an induced voltmeter value k that is a value that the induced voltage E0 is divided by the number of revolutions ω.

In Patent Literature 2, a technique is proposed in which a first estimator that stores a table or an expression showing the relationship between currents $I_\gamma$ and $I_\delta$ on a γ-δ axis and a permanent magnet temperature $T_{mag1}$ in association with a change in magnet temperatures when predetermined current command values $I_d$* and $I_q$* are given is included, a second estimator that stores a table or an expression showing the relationship between an absolute value $|\Phi|$ of an armature flux linkage $\Phi$ and a permanent magnet temperature $T_{mag2}$ in association with a change in magnet temperatures when predetermined current command values $I_d$* and $I_q$* are given is included, the outputs of these two estimators are selectively switched based on the size of the current command value or the size of the current detection value, and a magnet temperature is estimated.

Citation List

Patent Literature

Patent Literature 1: Japanese Unexamined Patent Application Publication No. 2002-267727
Patent Literature 2: Japanese Patent No. 5726273
Patent Literature 3: EP 2472716 A1 proposes an anomaly detection device for a permanent magnet synchronous electric motor.
US2011144843 discloses a control for a permanent magnet synchronous motor the torque command is zero for magnet temperature estimation.

Summary of Invention

Technical Problem

As a result of dedicatedly investigating the techniques of estimating the magnetic flux quantity or the temperature of the permanent magnet by the inventors of the present application, the inventors have found the findings below.

1) In Patent Literature 1, since a voltage sensor and a speed sensor are necessary to estimate the magnet magnetic flux, the number of parts is increased, leading to problems of a cost increase and a complicated configuration. In the case in which there are restrictions on installation spaces on which a driving system is installed, various sensors have to be mounted, and the build of the permanent magnet synchronous motor or the inverter has to be made small by the amount of extension of the sensors, leasing to a problem of a reduction in device efficiency, and to a problem of a temperature rise due to an increase in losses and the degradation of heat capacity.

2) When a voltage sensor is mounted between three-phase power supply lines of the permanent magnet synchronous motor ignorer to measure the induced voltage, the lines between the permanent magnet synchronous motor possibly short-circuit in case of voltage sensor failure, and this needs a proper insulating design, leading to a problem that implementation is difficult.

3) It is fine that the waveform of the induced voltage in the free run state is in an ideal sine wave shape. However, in the case in which there is the influence of a harmonic component caused by motor structures, such as the number of the stator slots of the permanent magnet synchronous motor and the winding arrangement of stator windings, the waveform of the induced voltage is greatly distorted. Therefore, in the method of using the measured value of the induced voltage, there is a problem that highly accurate estimation of an induced voltage coefficient value k fails.

4) In Patent Literature 2, in order to estimate the magnet temperatures $T_{mag1}$ and $T_{mag2}$, it is necessary to in advance acquire the table data of current detection values when the current command values $I_d^*$ and $I_q^*$ are given or the table data of magnet temperature estimation values to the absolute value $|\Phi|$ of the armature flux linkage by magnetic field analysis or experiment. As public knowledge, since the d-axis inductance $L_d$ and the q-axis inductance $L_q$ have dependence on the d-axis current, the q-axis current, and the magnet temperature, a problem arises that enormous time and workloads are necessary in order to create table data of excellent accuracy for all conditions.

5) Even though the non-linearities of these inductances are modeled using equations or table data, influence, such as the analysis error of magnetic field analysis, measurement errors or adjustment errors of actual devices, and production errors of individual permanent magnet synchronous motors, is actually included, and thus it is difficult to achieve perfect modeling with no errors . There is also a problem that a resistance constant R has errors due to temperature fluctuations in the stator winding, also leading to a problem of degrading the accuracy of the absolute value $|\Phi|$ of the armature flux linkage that is the input variable of the estimator.

6) In the case in which a permanent magnet that is demagnetized at a ratio of -1% with respect to a +10°C temperature fluctuation in the magnet is assumed and the influence of -1% demagnetization is estimated, it is necessary to achieve accuracy within at least one-percent error on the non-linearity or demagnetization properties of inductances that are under consideration using input information (the absolute value $|\Phi|$ of the armature flux linkage) used for estimation, equations, or table data, and the influence of -1% demagnetization is greatly affected by the accuracy of the set value of the inductance $I_d^*$ or the inductance $L_q^*$ under consideration using the estimator.

From the reasons above, the estimation accuracy of the magnet magnetic flux is likely to be insufficient.
An object of the present invention is to estimate a magnet magnetic flux robustly and highly accurately to the harmonic component of an induced voltage or to constant setting errors in a resistance and to an inductance with no use of any voltage sensor or speed sensor or data from magnetic field analysis or experiment in drive-controlling a permanent magnet synchronous motor.

Solution to Problem

The present invention estimates, in a driving device for a permanent magnet synchronous motor according to claim 1 and claim 13, a magnetic flux quantity of a magnet included in the permanent magnet synchronous motor or a temperature of the magnet based on a voltage command value and rotation speed information on the permanent magnet synchronous motor in a state in which a current command value is outputted when a torque command value is zero.

Advantageous Effects of Invention

According to the present invention, the magnet magnetic flux or the temperature is estimated robustly and highly accurately to the harmonic component of the induced voltage or to constant setting errors in the resistance and the inductance with no use of the acquisition of data from magnetic field analysis or experiment, and thus the accuracy of torque can be improved.

Brief Description of Drawings

Figure 1 is a diagram showing the functional block of the driving device for a permanent magnet synchronous motor according to a first embodiment.
Figure 2 is a vector diagram of the permanent magnet synchronous motor in a state in which a predetermined current command value is given.
Figure 3 is a vector diagram of the permanent magnet synchronous motor in a state in which the current command value is zero.
Figure 4 is a vector diagram of the permanent magnet synchronous motor when the current command value is zero and an axis error occurs.
Figure 5 is an enlarged diagram of the partial cross section of the permanent magnet synchronous motor.
Figure 6 is a diagram showing an example waveform of the induced voltage of the permanent magnet synchronous motor.
Figure 7 is a diagram showing the functional block of the driving device for a permanent magnet synchronous motor according to a second embodiment.
Figure 8 is a diagram showing the outline of a flow that executes the estimation of a magnet magnetic flux at predetermined time intervals according to a third embodiment.
Figure 9 is a diagram showing the outline of a flow that executes the estimation of a magnet magnetic flux prior to starting torque in coasting restart according to a fourth embodiment.
Figure 10 is a diagram showing the outline of a flow that executes the estimation of a magnet magnetic flux prior to stopping drive control according to a fifth embodiment.
Figure 11 is a diagram showing the functional block of the driving device for a permanent magnet synchronous motor according to a sixth embodiment.
Figure 12 is a diagram showing the functional block of the driving device for a permanent magnet synchronous motor according to a seventh embodiment.
Figure 13 is a diagram showing the schematic configuration of a part of a railway vehicle on which the driving device for the permanent magnet synchronous motor according to the present invention is mounted as an eighth embodiment.

Description of Embodiments

In the following, as forms that embody the present invention, first to eight embodiments will be described in detail with reference to the drawings, the first embodiment not being covered by the subject-matter of the claims. In the embodiments, components having the same reference numbers show the same components or components having similar functions.
Note that configurations described below are merely embodiments, and embodiments of the present invention are not limited to the embodiments below.

First Embodiment

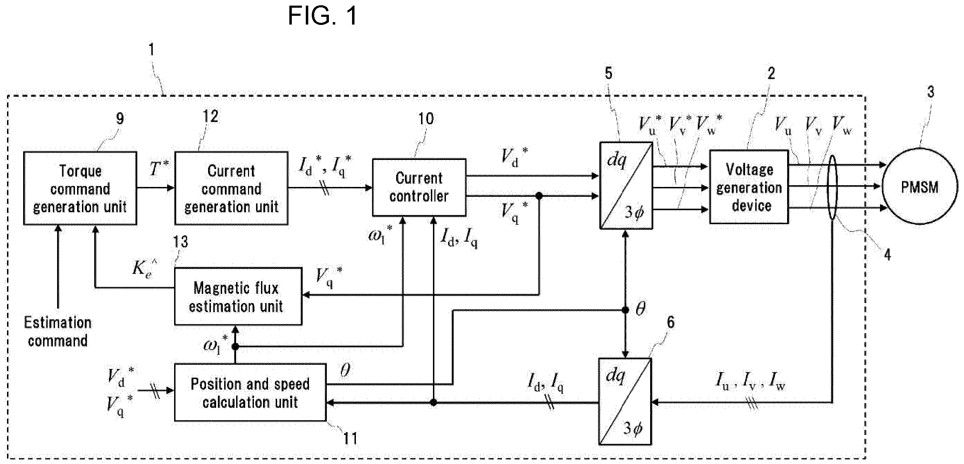

Figure 1 is a diagram showing the functional block of the driving device for a permanent magnet synchronous motor according to a first embodiment. Figure 1 shows, as a functional block, the configuration when a magnet magnetic flux is estimated in a state in which the permanent magnet synchronous motor drive-controlled by a driving device, such as an inverter.

Note that in Figure 1, a functional block diagram that estimates a magnet magnetic flux is shown. However, the magnet magnetic flux and the magnet temperature can be converted using the temperature coefficient $\alpha$ (%/°C) of a magnet, a configuration may be provided in which the magnet temperature is estimated according to the first embodiment.

A driving device 1 shown in Figure 1 is mounted with a control program that vector-controls a permanent magnet synchronous motor 3 which is connected as a load. However, Figure 1 shows only the functional block of the minimum configuration necessary to estimate a magnet magnetic flux. A power converter (main circuit) composed of a driving transistor, such as an IGBT (Insulated Gate Bipolar Transistor), and a power device, such as a diode, and the control configuration over this power converter is represented by a voltage generation device 2, and the detailed illustration is omitted.

A torque command generation unit 9 outputs a torque command value T* for torque to be generated in the PMSM in response to a power command or a switching command for a control mode from a higher system control unit (its illustration is omitted).

A current command generation unit 12 outputs a d-axis current command value $I_d{}^*$ and a q-axis current command value $I_q{}^*$ that output a predetermined torque in response to a torque command value $T_m{}^*$. Here, the direction of the magnetic flux of a magnet in synchronous rotation with a rotor included in the permanent magnet synchronous motor 3 is a d-axis, and a direction at right angles to the d-axis at an electrical angle is a q-axis.

A current controller 10 outputs voltage command values $V_d{}^*$ and $V_q{}^*$ to converge current deviation on zero to $I_d{}^*$ and $I_q{}^*$ such that a d-axis current detection value $I_d$ is matched with a q-axis current detection value $I_q$ by PI (Proportional-Integral) control, for example.

A coordinate converter 5 performs three-phase conversion from dq coordinates that are rotating coordinates using the d-axis voltage command value $V_d{}^*$, the q-axis voltage command value $V_q{}^*$, and a phase angle $\theta$, and generates command values $V_u{}^*$, $V_v{}^*$, and $V_w{}^*$ in three-phase ac voltage waveforms.

Using the voltage generation device 2, the command values $V_u{}^*$, $V_v{}^*$, and $V_w{}^*$ in three-phase ac voltage waveforms are converted into PWM (Pulse Width Modulation) signals, the voltage generation device 2 applies $V_u$, $V_v$, and $V_w$ as three-phase ac voltages to the permanent magnet synchronous motor 3 through a drive circuit and a main circuit (although not shown in the drawing, the drive circuit and the main circuit are included in the voltage generation device 2).

The permanent magnet synchronous motor 3 generates running torque by magnet torque, which is generated by suction and repulsion between a magnetic pole due to a rotating magnetic field generated on the stator side by the application of a three-phase ac voltage and the magnetic pole of the permanent magnet of the rotor, and reluctance torque, which is generated by suction force between the magnetic pole due to the rotating magnetic field of the stator and the magnetic salient pole of the rotor.

A current detector 4 detects three-phase currents $I_u$, $I_v$, and $I_w$ in a U-phase, a V-phase, and a W-phase carried through the permanent magnet synchronous motor 3 together with their waveforms. However, the current detector 4 does not necessarily detect all the three-phase currents. A configuration may be provided in which any of two phases are detected and the remaining phase is determined under the assumption that three-phase electric currents are in an equilibrium state.

A coordinate converter 6 converts the three-phase currents $I_u$, $I_v$, and $I_w$ of the permanent magnet synchronous motor 3 detected at the current detector 4 into the dq coordinates of a rotating coordinate system using the phase angle $\theta$, and outputs the three-phase currents $I_u$, $I_v$, and $I_w$ as $I_d$ and $I_q$ to the current controller 10 and a position and speed calculation unit 11.

The position and speed calculation unit 11 calculates a position $\theta$ of the magnet magnetic flux provided on the rotor and an angular frequency command value $\omega_1{}^*$ of the rotor, based on information, such as the voltage command values $V_d{}^*$ and $V_q{}^*$, the current command values $I_d{}^*$ and $I_q{}^*$, and the current detection values $I_d$ and $I_q$. Note that in the case in which a position sensor, such as a resolver, is included, the detection information of the sensor is captured, and the phase $\theta$ and the angular frequency command value $\omega_1{}^*$ are outputted.

A magnetic flux estimation unit 13 includes a function that calculates a magnet magnetic flux estimation value $K_e{}^{\wedge}$ based on the angular frequency command value $\omega_1{}^*$ and the voltage command value $V_q{}^*$. In the estimation of the magnet magnetic flux $K_e$, an estimation execution command is inputted to the torque command generation unit 9, and the estimation is executed in a state in which the torque command generation unit 9 turns the torque command value to zero. The estimation execution command is outputted from the higher system control unit (its illustration is omitted) or from the magnetic flux estimation unit 13.

In the following, the estimation principle of the magnetic flux estimation unit 13 will be described.

The voltage equation of the permanent magnet synchronous motor is expressed by the following equation.

[Eq. 2]

$$v_\mathrm{d} = r_1 \cdot i_\mathrm{d} + L_\mathrm{d} \cdot \frac{d}{dt} i_\mathrm{d} - \omega_1 \cdot L_\mathrm{q} \cdot i_\mathrm{q} \qquad (2)$$

[Eq. 3]

$$v_\mathrm{q} = r_1 \cdot i_\mathrm{q} + L_\mathrm{q} \cdot \frac{d}{dt} i_\mathrm{q} + \omega_1 \cdot L_\mathrm{d} \cdot i_\mathrm{d} + \omega_1 \cdot K_e \qquad (3)$$

Here, $v_\mathrm{d}$ is a d-axis voltage, $v_\mathrm{q}$ is a q-axis voltage, $L_\mathrm{d}$ is a d-axis inductance, $L_\mathrm{q}$ is a q-axis inductance, $r_1$ is a resistance value, and $K_e$ is a magnet magnetic flux.

It is assumed that the state quantities of the actual voltage, electric current, resistance value, and inductance of the permanent magnet synchronous motor 3 can be accurately grasped, the estimation value $K_e{}^\wedge$ of the magnetic flux can be computed from Equation (4).

[Eq. 4]

$$K_e^{\wedge} = (v_\mathrm{q} - r_1 \cdot i_\mathrm{q} - L_\mathrm{q} \cdot \frac{d}{dt} i_\mathrm{q} - \omega_1 \cdot L_\mathrm{d} \cdot i_\mathrm{d}) / \omega_1 \qquad (4)$$

It is assumed that the computation of the constant $K_e{}^\wedge$ of the magnet magnetic flux is considered by Equation (4), for the voltages $v_\mathrm{d}$ and $v_\mathrm{q}$, reference only has to be made to the voltage command values $V_\mathrm{d}{}^*$ and $V_\mathrm{q}{}^*$ of the voltage generation device 2, and for the electric current, the current detection values $I_\mathrm{d}$ and $I_\mathrm{q}$ only have to be used. However, the resistance $r_1$ and the inductances $L_\mathrm{d}$ and $L_\mathrm{q}$ depend on the winding temperature of the permanent magnet synchronous motor, the magnetic saturation properties of a magnetic material used for an iron core, the motor structure, and the current conditions, and are difficult to be accurately grasped.

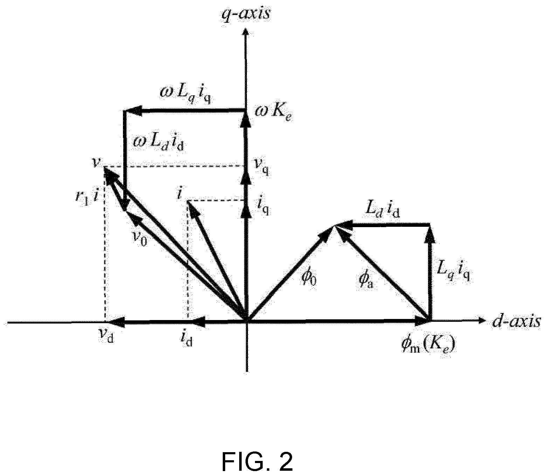

Figure 2 is a vector diagram expressed from Equations (2) and (3) . It is known that in order to output the current command values $I_\mathrm{d}{}^*$ and $I_\mathrm{q}{}^*$, a voltage v to be applied greatly changes depending on the resistance $r_1$ and the inductances $L_\mathrm{d}$ and $L_\mathrm{q}$. When the influence of the resistance $r_1$ and the inductances $L_\mathrm{d}$ and $L_\mathrm{q}$ over the magnetic flux estimation value $K_e{}^\wedge$ is considered, the voltage drop due to the inductances $L_\mathrm{d}$ and $L_\mathrm{q}$ is more dominant than the resistance $r_1$, and the accuracy of the constants of the inductances $L_\mathrm{d}$ and $L_\mathrm{q}$ is substantially important, except an extremely low speed low speed range where the drive frequency is about a few Hz.

However, the magnet magnetic flux is assumed to fluctuate by $\pm 1\%$ to a $\pm 10°C$ temperature fluctuation, and the magnet magnetic flux $K_e$ is to be highly accurately estimated at $\pm 1\%$ resolution. To this end, it is necessary that the inductances $L_\mathrm{d}$ and $L_\mathrm{q}$ having properties which fluctuate with respect to the currents $I_\mathrm{d}$ and $I_\mathrm{q}$, and the magnet magnetic flux $K_e$ be set within at least a one-percent error using schemes of magnetic field analysis or adjustment of actual devices and the magnet magnetic flux $K_e$ be calculated. The non-linearity of the inductance greatly changes as well due to the design of the permanent magnet synchronous motor 3 or operating conditions (current conditions), and thus the schemes that determine the magnet magnetic flux $K_e$ using equations or table data have problems at the point of practicality or accuracy.

Since in the d-axis inductance $L_\mathrm{d}$, the magnetic flux passage through the d-axis passing through a magnet having a low relative permeability, the d-axis inductance $L_\mathrm{d}$ is not easily affected, even in the case in which the magnetic saturation of the iron core on the d-axis changes due to a change in the electric current. On the other hand, since in the q-axis inductance $L_\mathrm{q}$, no magnet is included on a magnetic path through which the magnetic flux passes, the q-axis inductance $L_\mathrm{q}$ greatly fluctuates due to the influence of saturation of the iron core because of a change in the electric current. Therefore, a robust method is desirable specifically to errors or fluctuations in the q-axis inductance $L_\mathrm{q}$.

Therefore, the inventors of the present application have found that in order to estimate the magnet magnetic flux $K_e$ with no influence of constant errors, in the state in which the current command values $I_\mathrm{d}{}^*$ and $I_\mathrm{q}{}^*$ on the d-axis and the q-axis are intentionally zero and torque shown in Equation (1) is controlled to zero, the voltage command value $V_\mathrm{q}{}^*$ and the angular frequency command value $\omega_1{}^*$ in the state in which control is set are used, and thus the magnet magnetic flux $K_e$ can be estimated with no influence of constant errors in the resistance $r_1$ and the inductances $L_\mathrm{d}$ and $L_\mathrm{q}$. When the current command values $I_\mathrm{d}{}^*$ and $I_\mathrm{q}{}^*$ are set to zero from Equations (2) and (3) and errors in current control by the current controller 10 are regarded as zero, the voltage command values $V_\mathrm{d}{}^*$ and $V_\mathrm{q}{}^*$ in the set state have equations below.

[Eq. 5]

$$v_d^* = 0 \qquad (5)$$

[Eq. 6]

$$v_q^* = \omega_1^* \cdot \mathrm{K_e} \qquad (6)$$

That is, the estimation value $K_e^\wedge$ of the magnet magnetic flux can be calculated from the following equation.
[Eq. 7]

$$\mathrm{K_e^\wedge} = v_q^*/\omega_1^* \qquad (7)$$

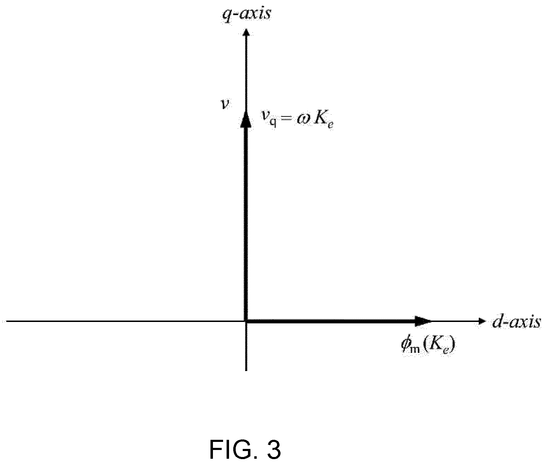

Figure 3 is a vector diagram when the current command values $I_d^*$ and $I_q^*$ are zero. When the current command values $I_d^*$ and $I_q^*$ are zero and errors from current control are zero, the q-axis voltage command value $V_q^*$ is turned into a state of outputting a voltage that cancels the induced voltage due to the actual magnet magnetic flux $K_e$. In the comparison of the voltage vectors shown in Figure 3 with those in Figure 2, it is known that the q-axis voltage command value $V_q^*$ can be computed only from $\omega_1^*$ and $K_e$, not including the terms of the resistance $r_1$ and the inductances $L_d$ and $L_q$.

The case is taken as an example in which the magnet magnetic flux fluctuates at the same frequency, in the case in which in Equation (7), the temperature of the permanent magnet increases and the actual magnet magnetic flux $K_e$ decreases, $V_q^*$ in the set state also decreases. Conversely, in the case in which the temperature of the permanent magnet decreases and the actual magnetic flux $K_e$ increases, $V_q^*$ in the set state also increases. As described above, based on the q-axis voltage command value $V_q^*$ when the current command value is zero, the magnet magnetic flux $K_e$ can be estimated. However, as apparent from Equation (7), under the conditions in which the speed of the rotor of the permanent magnet synchronous motor is zero, the estimation method according to the first embodiment is not theoretically applicable.

Here, in the estimation method according to the first embodiment, since it is necessary that the current deviation by current control be zero, drive control is performed as the current command values $I_d^*$ and $I_q^*$ are zero, and the q-axis voltage command value $V_q^*$ and the angular frequency command value $\omega_1^*$ are used in the set state. In order to eliminate the influence of noise, filter processing, moving average processing, or integration processing may be applied.

Note that in the case in which the position and speed calculation unit 11 performs position sensorless drive control, a position and speed estimation method based on publicly known induced voltages is used in speed ranges, except extremely low speed, based on information, such as the voltage command values $V_d^*$ and $V_q^*$, the current command values $I_d^*$ and $I_q^*$, or the current detection values $I_d$ and $I_q$. An axis error $\Delta\theta_c$ that is a phase error between the actual d-axis direction and the d-axis recognized by the controller, the angular frequency command value $\omega_1^*$ is outputted such that the axis error $\Delta\theta_c$ is zero by feedback control, such as PI control, and thus the permanent magnet synchronous motor 3 is driven. The method of axis error estimation using the induced voltage estimates the axis error $\Delta\theta_c$ using the angle of deviation of the calculated induced voltage vector. As apparent from Figure 2, when constant errors occur in the inductances $L_d$ and $L_q$, the induced voltage vector used for axis error estimation also has an error, and the axis error $\Delta\theta_c$ to be calculated also has an offset error.

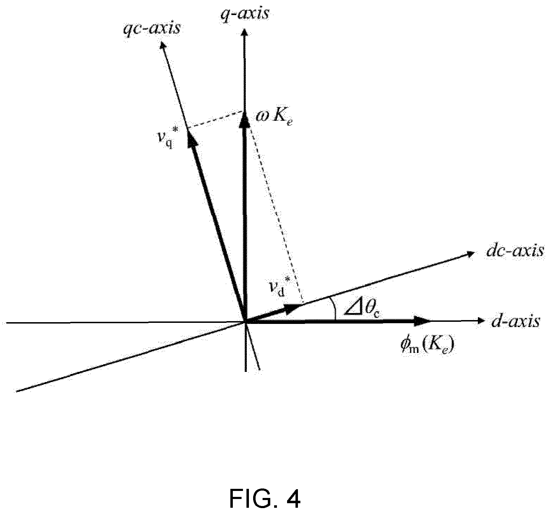

To this, in the state in which the current command values $I_d^*$ and $I_q^*$ are zero and the torque command value is zero in the first embodiment, as shown in Figure 4, when the current deviation of current control by the current controller 10 is regarded as zero, the influence of the inductances $L_d$ and $L_q$ is not affected. Then, the axis error $\Delta\theta_c$ can be calculated from Equation (8) from the angle of deviation of the voltage vector in outputting a voltage that cancels an actual induced voltage $\omega K_e$ due to the magnet magnetic flux.
[Eq. 8]

$$\Delta\theta_c = \tan^{-1}(v_d^*/v_q^*) \qquad (8)$$

That is, in the state in which the current command values $I_d^*$ and $I_q^*$ are controlled to zero and the torque is zero, since the primary angular frequency command value $\omega_1^*$ is calculated based on the axis error $\Delta\theta c$ in Equation (8), the angular frequency command value $\omega_1^*$ in Equation (7) is not affected by constant errors in the resistance $r_1$ or the inductances $L_d$ and $L_q$, and thus the estimation value $K_e^\wedge$ of the magnet magnetic flux can be highly accurately calculated.

In the configuration of the first embodiment, even the permanent magnet synchronous motor 3, which easily includes harmonic components in the waveform of the induced voltage like a permanent magnet synchronous motor for railway vehicles, can highly accurately estimate the magnet magnetic flux.

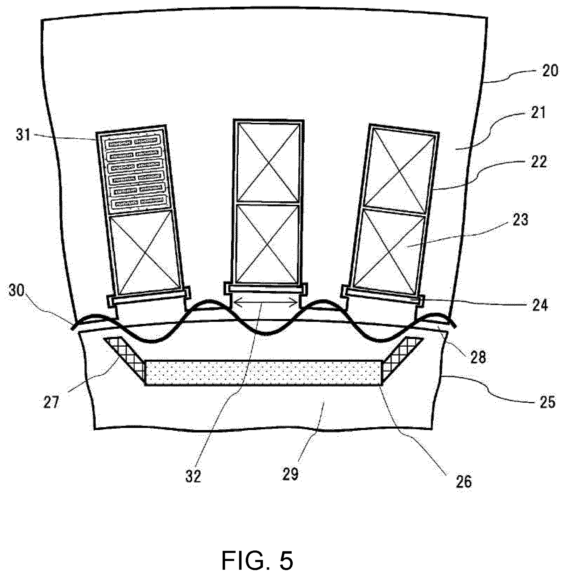

Figure 5 is a partial cross sectional view of a permanent magnet synchronous motor. Figure 5 shows a part of a cross sectional view of a stator 20 and a rotor 25 of the permanent magnet synchronous motor continuously formed the axial direction. A stator winding 23 is integrally formed being covered with a resin or insulting tape, for example, in a state in which a plurality of wires 31 is bundled.

In the case in which in manufacturing processes, the stator winding 23 that is integrally formed is assembled on a plurality of stator slots 22 placed in the circumferential direction of a stator iron core 21, the stator winding 23 is assembled in which the stator winding 23 is inserted from the inner circumference side of the stator 20 into the stator slot 22 in a state in which the rotor 25 is pulled out of the stator 20.

After the assembly, a winding retaining member 24 is inserted from the axial direction into a groove provided on the inner circumference side of the stator slot 22, and thus the popping up of the stator winding 23 to the inner circumference side is prevented.

As described above, in high voltage motors of middle- or high-capacity having an output of a few hundred kW or more, including railway motors, for a width 32 in the circumferential direction of the stator slot on the inner circumference side, an open slot shape, in which a width greater than or equal to the width of the stator winding in the circumferential direction is reserved, is generally used.

Therefore, when the distribution of the magnetic properties in the circumferential direction is thought in a gap 28 that is an air-gap to be the space between the stator 20 and the rotor 25, since the iron part and the open slot part (the air part) of the iron core 21 are alternately arranged, the ease of passing (permeance) of the magnetic flux in the gap 28 between the stator and the rotor has spatial pulses corresponding to the number of the stator slots and the pole logarithm, and a pulsation magnetic flux 30 (a waveform shown in an overlap with the portion of the gap 28 in Figure 5) due to the stator slots occurs.

From these reasons, in the railway motor, harmonic components included in the waveform of the induced voltage due to the motor structure are prone to be increased.

On the other hand, in a low voltage motor of a small capacity, the stator winding 23 is not usually integrally formed in a manufacturing method in which the wire 31 is wound being inserted from the inner circumference side of the stator slot 22 turn by turn using an automated coil winder, for example. Thus, the width 32 of the opening of the stator slot 22 in the circumferential direction can be a semienclosed stator slot the width of which is narrowed to a width through which approximately one winding is passed. Therefore, the pulse of permeance is reduced, and the influence of the harmonic component due to the number of the stator slots 22 is reduced.

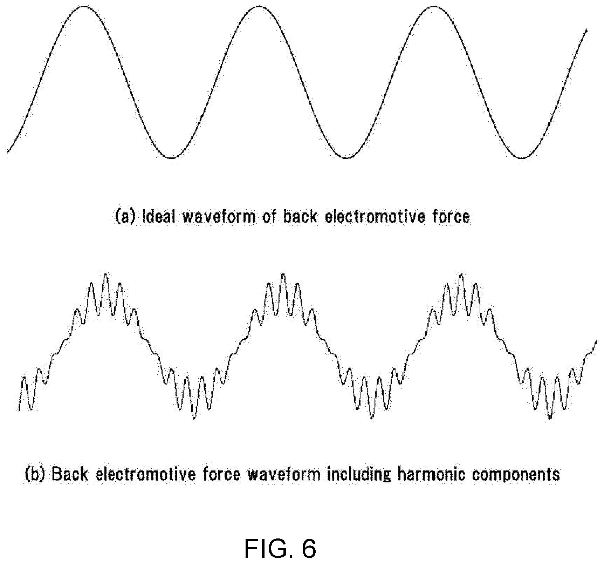

Figure 6 is a diagram showing an example waveform of the induced voltage. When the motor properties or the controllability of the permanent magnet synchronous motor is considered, a waveform in a sine wave shape in Figure 6(a) is desirable. However, in the waveform of the induced voltage including harmonic components corresponding to the number of the stator slot 22 and the pole logarithm, a waveform shown in Figure 6(b) is formed due to the influence of the pulsation magnetic flux 30 shown in Figure 5. In regard to the frequency component of this harmonic, a harmonic in the order of the number of the stator slots appears, which relatively pass during the turning of the rotor at one cycle at an electrical angle. Therefore, an order n of the harmonic component due to the stator slot takes the following equation where the number of the stator slots is Ns1, the pole logarithm of the permanent magnet synchronous motor 3 is $P_m$.
[Eq. 9]

$$n = Ns_1/P_m \qquad (9)$$

In the case in which a magnet magnetic flux is detected from the induced voltage under free run under which the inverter is stopped like Patent Literature 1, which is a background art literature, the influence of this harmonic component is easily affected. It is also considered that only a harmonic component is removed by filter processing, such as lowpass filtering. However, as shown in Equation (9), since the frequency of the harmonic component has an order n times that of a fundamental harmonic component, it is necessary to provide a filter that handles variable frequencies, and a problem arises that the configuration becomes complicated. With the use of a filter, the gain of the fundamental harmonic component is affected, leading to a possibility of the degradation of estimation accuracy.

On the other hand, since the configuration of the first embodiment has the method in which the torque command value by the torque command generation unit 9 is zero and a voltage in equilibrium with the actual induced voltage $\omega_1 K_e$ of the permanent magnet synchronous motor is outputted from the inverter on the dq-axis coordinates, the fundamental harmonic component of the induced voltage due to the magnet magnetic flux $K_e$ is handled as a direct current quantity, estimation is performed at the rotor frequency having a predetermined value or more, and thus the magnet magnetic flux can be estimated in the state in which the influence of the harmonic component is eliminated. In the following, the reason will be described.

A pulse period $T_h$ of the harmonic due to the number of the stator slots is expressed from the following equation.
[Eq. 10]

$$T_h = 1/(n \cdot f_1) \qquad (10)$$

When the control response $T_c{}^*$ is longer than the pulse period $T_h$ under the condition in which the position estimation control response of the controller is $T_c{}^*$, control makes no following even in the case in which vibrations of the harmonic component are included, and thus the position can be estimated with no influence of the harmonic component, even though the induced voltage is pulsing.

In other words, in regard to the conditions for the frequency in which the estimation of the magnet magnetic flux $K_e$ is performed, estimation only has to be performed in which a frequency $f_1$ is in a range shown below where the pole logarithm of the permanent magnet synchronous motor 3 is $P_m$, the slot number of the stator is Ns1, and the response set value of position estimation control is $T_c{}^*$ such that the influence of the harmonic due to the stator slot is not affected.

[Eq. 11]

$$P_m/(N_{s1} \cdot f_1) < T_c^* \qquad (11)$$

[Eq. 12]

$$f_1 > P_m/(N_{s1} \cdot T_c^*) \qquad (12)$$

Since the carrier frequency of the railway inverter is restricted to about 1 to 2 kHz because of restrictions on the temperature rise in the inverter, the inverter frequency $f_1$ satisfies the relationship in Equation (12) in most of the band, except the band where the number of revolutions is low.

In other words, the estimation of the magnet magnetic flux or the temperature is performed at a predetermined speed or more, and thus the fundamental harmonic component of the induced voltage is can be handled as a direct current quantity on the dq-axis coordinates with no influence of the harmonic component of the induced voltage that is generated due to the stator slot of the permanent magnet synchronous motor 3, and the magnet magnetic flux $K_e$ can be estimated even on a permanent magnet synchronous motor 3 with a great influence of the harmonic component.

In addition to determining conditions that perform estimation calculated from the relationship between the control response and the pulse frequency of the harmonic, a configuration may be provided in which in order to improve estimation accuracy, reference is made to information on the rotor frequency in the state in which the current command values $I_d{}^*$ and $I_q{}^*$ are controlled to zero such that the induced voltage $\omega_1 K_e$ is a predetermined value or more and estimation is selectively performed at a predetermined rotor frequency or more.

According to the first embodiment, the estimated magnet magnetic flux estimation value $K_e{}^\wedge$ is outputted to the torque command generation unit 9 or the current command generation unit 12, and the current command values $I_d{}^*$ and $I_q{}^*$ corresponding to the torque command value $T_m{}^*$ or the torque command value shown in Equation (1) are corrected such that the amount of fluctuations in the magnet magnetic flux is corrected. This correction compensates the amount of fluctuations in magnet torque that affects the magnet magnetic flux, based on the ratio of the magnet torque to the reluctance torque.

The estimation value $K_e{}^\wedge$ of the magnet magnetic flux may be used for another control system, which is not used only for correcting the torque command value $T_m{}^*$ or the current command values $I_d{}^*$ and $I_q{}^*$. For example, the control response can be improved or stabilized as well using the estimation value $K_e{}^\wedge$ for voltage command calculation or for the constant set value of the magnet magnetic flux like weak magnetic flux control.

With the accumulation and comparison of temperature estimation data, the estimation value $K_e{}^\wedge$ may be used as a scheme that determines an abnormality in motor by the detection of a singular heat generation or a scheme that detects a state abnormality, such as irreversible demagnetization due to the application of an abnormal diamagnetic field.

As described above, in the first embodiment, the magnet magnetic flux or the magnet temperature is estimated robustly and highly accurately to the harmonic component of the induced voltage or to constant setting errors in the resistance and the inductance with no use of data acquisition from magnetic field analysis or experiment, and thus the accuracy of torque can be improved.

Second Embodiment

A second embodiment is different, compared with the first embodiment, in that the magnet magnetic flux or the magnet temperature is estimated in a state in which a predetermined value other than zero is given to $I_d{}^*$ that is the current command value, $I_q{}^*$ is zero, and the torque command value is zero.

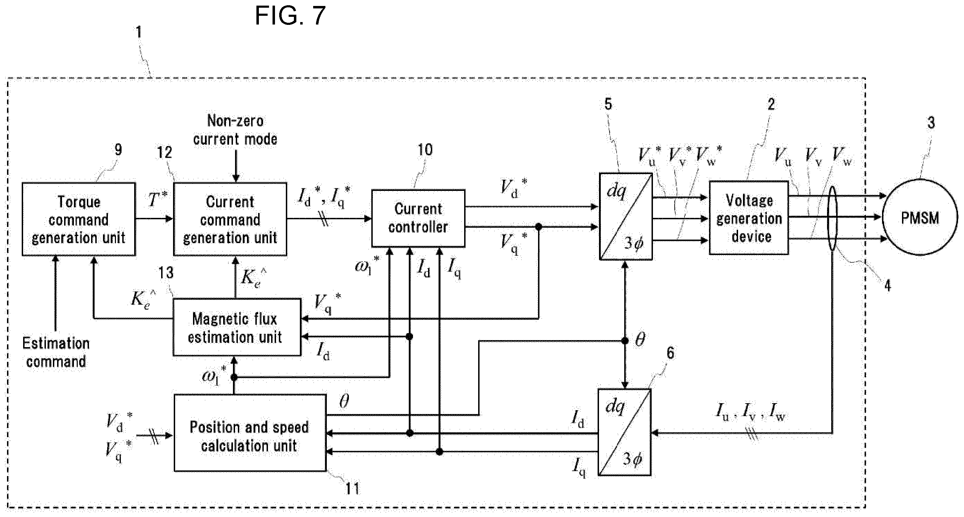

Figure 7 is a diagram showing the functional block of the driving device for a permanent magnet synchronous motor according to the second embodiment. A configuration is shown as a functional block in the estimation of a magnet magnetic flux in a state in which the permanent magnet synchronous motor is drive-controlled by a driving device, such as an inverter.

A voltage generation device 2 is provided with a period for which upper and lower output elements are simultaneously turned off in order to prevent the short circuit between elements, such as an IGBT included in upper and lower arms provided on each phase. In the case in which no voltage compensation is given, the output voltage in this period is short. Therefore, by a dead time compensation technique known as public knowledge, compensation is given to the voltage command value based on the polarity of the current detection value or the current command value such that the voltage exactly as the command value can be outputted.

Specifically in the low speed range where the induced voltage of the permanent magnet synchronous motor is low and the modulation rate is low, since the state is a state in which a large number of voltage pulses in narrow width are outputted, the ratio of the simultaneous off period occupied is relatively large to the output voltage, and influence affected to the output voltage is prone to be increased.

That is, in the case in which both of the d-axis current command value $I_d^*$ and the q-axis current command value $I_q^*$ shown in the first embodiment are zero in the low speed range, an accurate grasp of the polarity of the current detection value or the current command value used for compensation fails, whereas in the case in which the voltage is compensated based on a faulty polarity, voltage errors are increased inversely due to dead time compensation, leading to a possibility of the degradation of estimation accuracy.

To this, in the second embodiment, a tiny value is intentionally given to the d-axis current command value while the q-axis current command value is zero such that the polarity of the current command value or the current detection value can be determined, and thus the polarity of the electric current can be distinguished even in a torque zero command, dead time compensation can be accurately operated, and voltage output accuracy can be improved more than in the first embodiment.

The determination whether to give a tiny value to the d-axis current command value is performed by a higher system control unit (its illustration is omitted), for example. In the case in which the modulation rate or the speed information is a predetermined threshold or less, a current non-zero mode command is outputted to a current command generation unit 12, the q-axis current command value is zero, and a predetermined value in the order that can distinguish the polarity of the electric current use for dead time compensation is outputted to the d-axis current command value.

In the estimation of the magnet magnetic flux according to the second embodiment, the magnet magnetic flux is estimated from the following equation based on Equation (4) as the q-axis current is zero.
[Eq. 13]

$$K_e^\wedge = (v_q^* - \omega_1^* \cdot L_d^* \cdot i_d)/\omega_1^* \tag{13}$$

However, when a d-axis current corresponding to rated driving is carried, the influence of errors in the inductance $L_d$ Equation (13) in becomes great. Thus, as shown in Equation (14), a tiny d-axis current command value $I_d^*$ is set such that the size of the interference term ($\omega_{1Ld}i_d$) from the d-axis to the q-axis is sufficiently as small as 1/10 or less, for example, to the speed electromotive force term ($\omega_1 K_e$).
[Eq. 14]

$$\omega_1^* \cdot K_e^\wedge \gg \omega_1^* \cdot L_d^* \cdot i_d \tag{14}$$

With this configuration, the magnet magnetic flux or the temperature can be highly accurately estimated with no influence of errors or fluctuations in the q-axis inductance $L_q$ greatly depending on the q-axis current or fluctuations in the resistance constant $r_1$, as described in the first embodiment, since the d-axis current command value is a tiny value, the influence due to constant errors in the inductance can be 0.5% or less, even in the case in which it is assumed that $L_d$ has a five-percent deviation between the set value and the actual device.

As described above, the estimation of the magnet magnetic flux or the magnet temperature is performed in the state in which in the second embodiment, the q-axis current command value is zero, a predetermined value is given to the d-axis current command value, and the torque command value is zero, and thus the degradation of voltage output accuracy can be prevented, and the magnet magnetic flux can be highly accurately estimated even in the low speed range where the modulation rate is low.

Third Embodiment

A third embodiment is different, compared with the first embodiment, in that the estimated estimation value $K_e{}^\wedge$ of the magnet magnetic flux is stored on a storage device, such as RAM (Random Access Memory), included in a controller, drive control is performed based on the stored estimation value $K_e{}^\wedge$ after the storing, and the stored estimation value $K_e{}^\wedge$ is newly updated to an estimated value $K_e{}^\wedge$ in a period for which the current command values $I_d{}^*$ and $I_q{}^*$ are zero next time.

The thermal time constant of a totally enclosed railway permanent magnet synchronous motor (a type that does not directly take outside air into an excused device) having a few 100 kw level output is about a few hours, and is prolonged more than the thermal time constant of a small-capacity motor having a few kW level. In other words, when estimation can be performed under the conditions in which the necessity of continuous estimation of the magnet magnetic flux during drive control is not so high in a regular time interval that is 1/10 or less to the thermal time constant, the temperature of the permanent magnet fluctuations in can be grasped.

The regular time interval only has to be performed being matched with a specific sequence, such as a lapse of a predetermined time or at the time of starting or stopping a permanent magnet synchronous motor 3.

The timing of performing estimation is managed by a higher system control unit (its illustration is omitted) or a magnetic flux estimation unit 13, and an estimation execution command is outputted to a torque command generation unit 9.

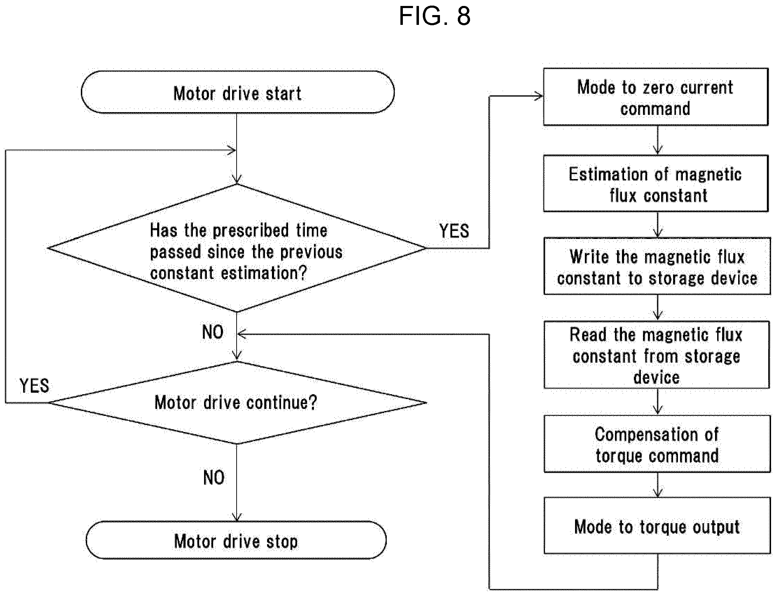

Figure 8 is an example flowchart for estimating the magnet magnetic flux constant in the third embodiment, which is a flowchart in the case in which estimation is performed at predetermined time intervals.

During drive control over the permanent magnet synchronous motor 3, the higher system control unit (its illustration is omitted) determines a lapse of a predetermined time, the estimation execution command is outputted to the torque command generation unit 9, and the estimation of the magnet magnetic flux $K_e$ is started. In estimating the constant, the voltage output of the inverter is not stopped, the torque command value $T_m{}^*$ is narrowed to zero (the current command values $I_d{}^*$ and $I_q{}^*$ are zero), the permanent magnet synchronous motor 3 is driven, and the magnet magnetic flux estimation value $K_e{}^\wedge$ is obtained by the method described in the first embodiment. After that, the estimated magnet magnetic flux $K_e{}^\wedge$ is stored on a storage device, such as a RAM.

Note that in the third embodiment, the scheme that makes the torque command value to zero is described as the current command values $I_d{}^*$ and $I_q{}^*$ similar to the first embodiment. However, a configuration may be provided in which the q-axis current command value $I_q{}^*$ is zero and a tiny value is given to the d-axis current command value like the second embodiment.

Based on the magnet magnetic flux $K_e{}^\wedge$ stored on the storage device, the torque command value $T_m{}^*$ is corrected, and after the correction, the torque is raised to the corrected torque command value.

Storing the estimated magnet magnetic flux on the storage device at predetermined time intervals is shown. However, the estimated magnet temperature may be stored at predetermined time intervals instead of the magnet magnetic flux. At this time, the magnet magnetic flux can be mutually converted using the temperature coefficient $\alpha$ (%/°C) of the magnet as shown in the first embodiment.

In the case in which a predetermined time elapses during driving the permanent magnet synchronous motor 3 by the higher system control unit (its illustration is omitted), the estimation process described above is performed at regular time intervals in which the current command values $I_d{}^*$ and $I_q{}^*$ are again narrowed to zero depending on time.

However, in the case in which the power of a system is obtained by driving a plurality of motors like railway vehicles, a configuration may be provided in which the influence affected to the total power of the system during the estimation period may be reduced in which the timing of performing the estimation of the motors is intentionally shifted and other motors are caused to output torque even though one motor narrows the torque command value $T_m{}^*$ to zero (the current command values $I_d{}^*$ and $I_q{}^*$ are zero) .

As described above, in the third embodiment, with the estimation of the magnet magnetic flux $K_e$ at regular time intervals at predetermined time intervals shorter than the thermal time constant of the permanent magnet synchronous motor 3, even in the case in which the magnet temperature fluctuates during drive control over the permanent magnet synchronous motor 3, the amount of fluctuations in the magnet magnetic flux can be compensated, and thus the accuracy of torque can be improved.

Fourth Embodiment

A fourth embodiment is different, compared with the third embodiment, in that in coasting restart in which from a state in which the voltage output of an inverter is stopped and the rotor of a permanent magnet synchronous motor 3 is in free run, the voltage output of the inverter is started and the permanent magnet synchronous motor 3 is restarted, a period is provided is provided for which the current command values $I_d{}^*$ and $I_q{}^*$ are zero before starting the torque command value $T_m{}^*$ and then the estimation of the magnet magnetic flux $K_e$ is performed.

Note that in the fourth embodiment, the scheme that makes the torque command value to zero is described as the current command values $I_d*$ and $I_q*$ similar to the first embodiment. However, a configuration may be provided in which the q-axis current command value $I_q*$ is zero and a tiny value is given to the d-axis current command value like the second embodiment.

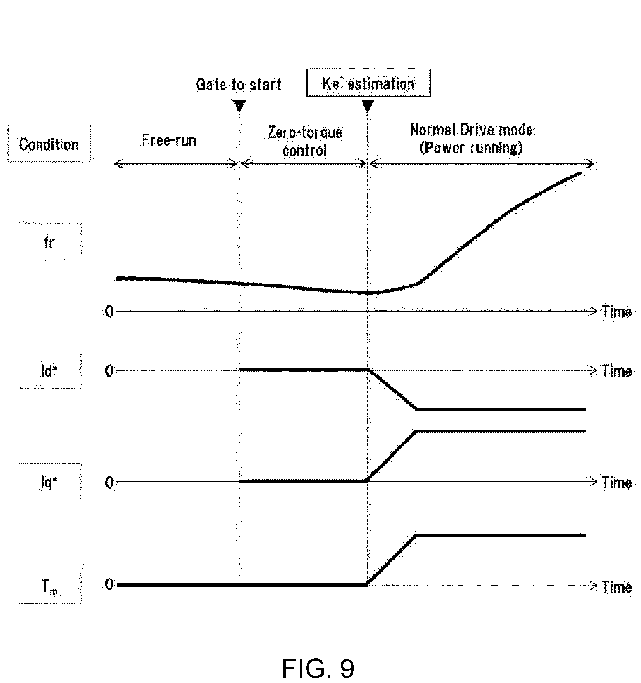

Figure 9 is a diagram showing the outline of a flow that executes the estimation of a magnet magnetic flux prior to starting torque in coasting restart. In Figure 9, fr is a rotor frequency (this is the same in embodiments below).

When the inverter performs coasting restart from the free run state of the rotor to start torque, in order to stabilize current control or position estimation control before starting the torque command value $T_m*$, a waiting time is provided in which the torque command value $T_m*$ and the current command values $I_d*$ and $I_q*$ are zero for converging control ("zero-torque control period" shown in Figure 9). After a lapse of the waiting time for convergence, the current command values $I_d*$ and $I_q*$ re started to establish the torque.

In the fourth embodiment, the period for which the current command values $I_d*$ and $I_q*$ are zero is used as the waiting time for convergence, and as shown in Figure 8, the magnet magnetic flux $K_e$ is estimated from Equation (7) using the q-axis voltage command value $V_q*$ and the primary angular frequency command value $\omega_1*$ immediately before starting the torque, and the torque command value $T_m*$ is corrected.

As shown as an example estimation method in the third embodiment, in the case in which estimation is performed at regular time intervals from the output state of the torque based on a predetermined time, it is necessary to provide a period for which the torque command value $T_m*$ of a torque command generation unit 9 is zero, which slightly degrades the performance of acceleration and deacceleration of a vehicle. On the other hand, like the fourth embodiment, with the use of the period for which the torque command value is zero in coasting restart, the magnet magnetic flux $K_e$ is estimated, and the performance of acceleration and deacceleration in the period for which the torque is outputted is not degraded.

Every time in the control period from which the torque command value is zero in coasting restart, a newly estimated constant is stored on a storage device, such as a RAM. In the case in which the update of the estimation value $K_e{}^\wedge$ of the storage device fails due to the start from a stop state in which the rotor frequency is zero, for example, drive control is performed from the corrected torque command value $T_m*$ based on the value of $K_e{}^\wedge$ stored on the storage device at the previous time.

Figure 9 shows the case in which re-powering is performed by coasting restart. However, similar effects can be obtained ion any of re-powering and regeneration in coasting restart.

Note that the update of the estimation value $K_e{}^\wedge$ may be selectively performed in which reference is made to the frequency at the point in time of ending the control mode in which the torque command value is zero in coasting restart, and the update is performed at a predetermined frequency or more.

After the power supply of a driving device 1 is applied, in starting from the first-time stop (in the state in which coasting restart is not performed yet), the estimation of the magnet magnetic flux estimation value $K_e{}^\wedge$ fails . Therefore, in regard to the initial value of the magnet magnetic flux estimation value $K_e{}^\wedge$ set to the storage device, and a magnet magnetic flux $K_e{}^\wedge$ corresponding a value lower than low temperatures of the permanent magnet synchronous motor 3 are assumed, the median in the range of the temperature fluctuations in the magnet (in other words, the median value between the upper limit and the lower limit in the specification range of the magnet temperature) . Thus, the accuracy of torque can be improved even in the first-time starting.

As described above, in the fourth embodiment, the period for which the torque command value is zero in coasting restart is used in the estimation of the magnet magnetic flux $K_e$ the period, and thus the estimation value $K_e{}^\wedge$ of the magnet magnetic flux is updated before starting the torque, and the torque command value $T_m*$ can be compensated. Accordingly, the accuracy of torque can be more improved with no degradation of acceleration and deacceleration performance in the period in which the torque is outputted, compared with the third embodiment.

Fifth Embodiment

A fifth embodiment is different, compared with the fourth embodiment, in that a control period for drive control is provided for which when a permanent magnet synchronous motor 3 turns off the torque from in the state in which the torque is outputted, the torque command value $T_m*$ is narrowed to zero and the current command values $I_d*$ and $I_q*$ are zero before the inverter is stopped, and the estimation of the magnet magnetic flux $K_e$ is performed.

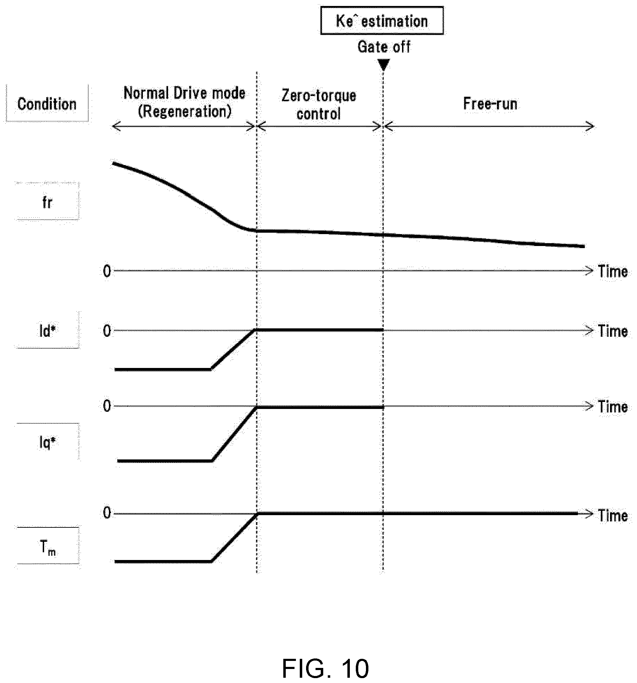

Figure 10 is a diagram showing the outline of a flow that executes the estimation of a magnet magnetic flux prior to stopping drive control.

In the case in which the rotor frequency fr is a predetermined value or more when the torque is turned off (in the case in which it is determined that an induced voltage is included), a period ("zero-torque control period" shown in Figure 10) is provided in which a gate is not turned off immediately after the torque command value $T_m*$ is narrowed to zero and the current command values $I_d*$ and $I_q*$ are zero for drive control for the purpose of estimation of the magnet magnetic flux $K_e$.

Note that in the fifth embodiment, the scheme that makes the torque command value to zero is described as the current command values $I_d^*$ and $I_q^*$ similar to the first embodiment. However, like the third embodiment, a configuration may be provided in which the q-axis current command value $I_q^*$ is zero and a tiny value is given to the d-axis current command value.

In the fourth embodiment, estimation is performed in the convergence waiting time before starting torque in coasting restart. However, it is assumed that in the case in which the time for which estimation is not performed yet to coasting restart next time is prolonged and starting is made next time from the stop state (in the case in which it is determined that no induced voltage is present), the update of the constant of the magnet magnetic flux estimation value $K_e{}^\wedge$ fails, leading to a possibility of increasing errors.

To this, the fifth embodiment is applied together with the fourth embodiment, and thus the magnet magnetic flux estimation value $K_e{}^\wedge$ can be obtained in coasting restart at a predetermined speed or more and when the torque is turned off. Thus, the frequency of estimation can be increased with no degradation of the performance of acceleration and deacceleration in the period for which the torque is outputted. Therefore, even in the case in which the time for which estimation is not performed yet until the constant update next time is prolonged, effects are obtained in which constant errors in the magnet magnetic flux are reduced and the accuracy of torque is further improved.

As described above, in the fifth embodiment, in the estimation period for the magnet magnetic flux, the period is provided for which the current command values $I_d^*$ and $I_q^*$ are zero before stopping the voltage output of the inverter, and thus, the intervals of updates of the constant ca ¥n be shortened, and the accuracy of torque can be further improved.

Sixth Embodiment

A sixth embodiment is different, compared with the embodiments above, in that an update determination unit 14 that determines the update of the constant of the magnet magnetic flux estimation value $K_e{}^\wedge$ corresponding to a modulation rate command value $V_c^*$.

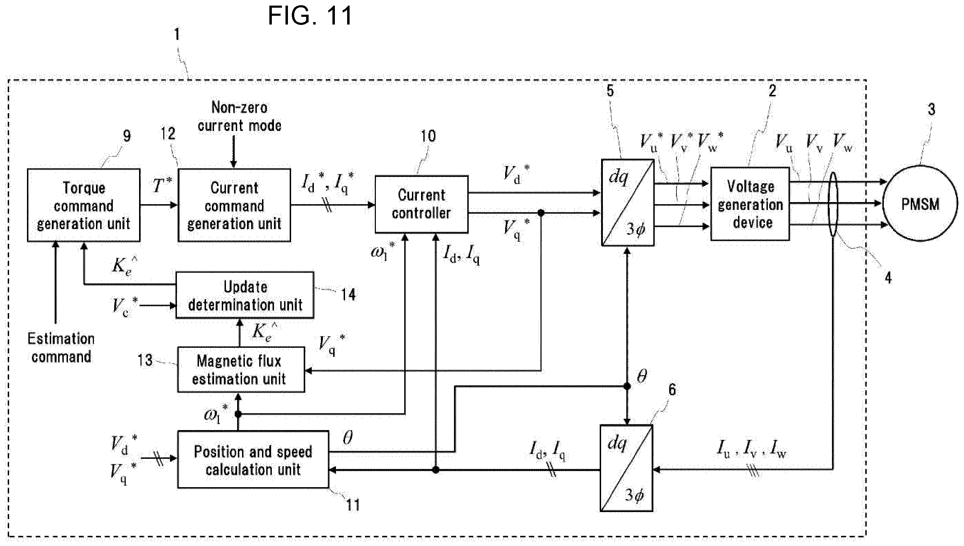

Figure 11 is a diagram showing the functional block of the driving device for a permanent magnet synchronous motor according to the sixth embodiment.

In the case in which it is determined that the modulation rate command value $V_c^*$ is a predetermined value or more, the update determination unit 14 permits the rewrite of the calculated magnet magnetic flux estimation value $K_e{}^\wedge$ at a magnetic flux estimation unit 13, whereas in the case in which it is determined that the modulation rate command value $V_c^*$ is a predetermined value or less, the update determination unit 14 operates not to rewrite the magnet magnetic flux estimation value $K_e{}^\wedge$.

A voltage generation device 2 is provided with a period for which upper and lower arms are simultaneously turned off for a predetermined time such that an element, such as an IGBT, included in the upper and lower arms in each phase is not simultaneously turned on. In regard to the shortage of the output voltage due to the simultaneous off period, voltage errors more or less occur due to adjustment errors, although voltage compensation is applied. In the case in which the carrier frequency is constant, this influence appears more noticeably as the modulation rate low. In the range where the modulation rate is low, voltage output accuracy is prone to be reduced.

As apparent from Equations (7) and (8), the estimation of the magnet magnetic flux $K_e$ depends on the voltage output accuracy of the voltage generation device 2, and thus the estimation of the magnet magnetic flux $K_e$ may be used in the range where the modulation rate that can reserve the voltage output is high.

In the sixth embodiment, the description is made using the modulation rate command value $V_c^*$. However, even though the modulation rate command value $V_c^*$ is replaced by the absolute value of the voltage command value or the frequency command value corresponding to the modulation rate command value $V_c^*$, similar effects can be obtained.

As described above, in the sixth embodiment, the update determination unit 14 using the modulation rate command value $V_c^*$ is provided, and the update of the constant estimation of the magnet magnetic flux is made effective only when the modulation rate command value $V_c^*$ is a predetermined reference value or more. Thus, the degradation of the estimation accuracy of the magnet magnetic flux estimation value $K_e{}^\wedge$ can be prevented more than in the embodiments above.

Seventh Embodiment

A seventh embodiment is different, compared with the sixth embodiment, in that a temperature calculation function by a heat equivalent circuit calculation unit 15 is further provided.

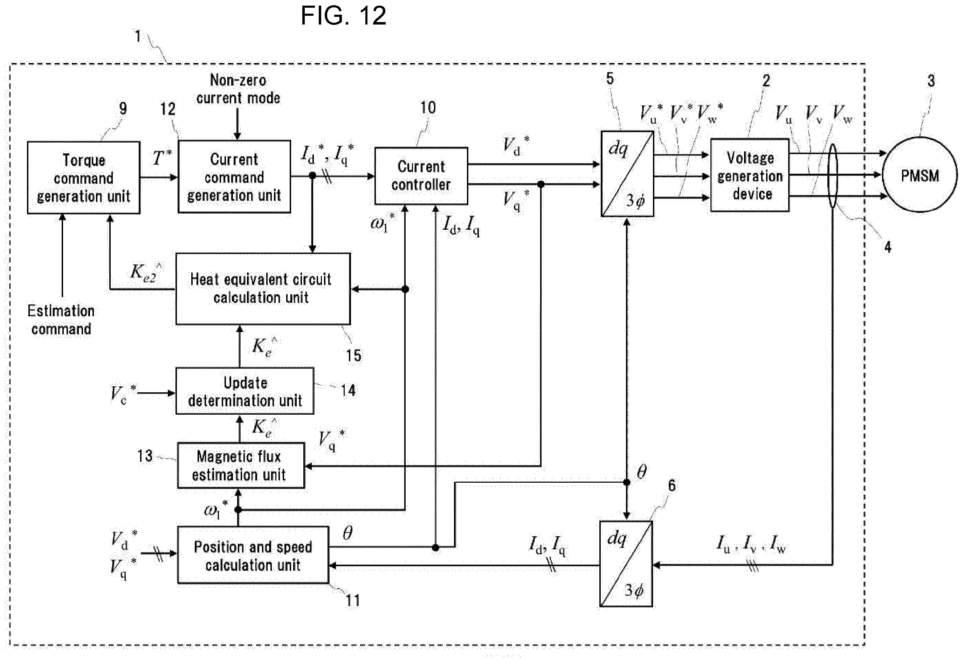

Figure 12 is a diagram showing the functional block of the driving device for a permanent magnet synchronous motor according to the seventh embodiment.

The heat equivalent circuit calculation unit 15 calculates magnet temperatures using a temperature calculation scheme, such as a heat equivalent circuit, in a period for which a torque command value other than zero is given for driving, or in the free run state of a rotor in which the voltage output of an inverter is stopped, and outputs a constant

$K_{e2}$^ that the estimated magnet temperature is converted into a magnet magnetic flux.

In the heat equivalent circuit calculation unit 15, that value that the magnetic flux estimation value $K_e$^ obtained from any method of the first embodiment to the sixth embodiment is temperature-converted is the initial value of the magnet temperature, the current command values $I_d$* and $I_q$* or the current detection values $I_d$ and $I_q$, and the angular frequency command value $\omega_1$* are inputs, and the magnet temperature is calculated.

In the case in which temperatures are calculated using the heat equivalent circuit simply based on information on the electric current and the frequency with no use of the estimation method for the magnet magnetic flux according to the present invention, this is a temperature estimation method in feed forward with no feedback element, leading to a problem that offset errors occur in the temperature estimation value.

In the case in which the state change of the motor (disturbance element) is added due to clogging in a ventilation duct for log time use, for example, temperature estimation errors are further increased, leading to a possibility of outputting a faulty temperature estimation result.

On the other hand, like the seventh embodiment, the magnet magnetic flux estimation value $K_e$^ is used as a feedback value in the calculation of the heat equivalent circuit, and thus the influence of the offset errors can be eliminated at the timing of the update of the magnetic flux estimation value $K_e$^, and more highly accurate temperature estimation can be achieved. Thus, not only when the current command values $I_d$* and $I_q$* are zero but also during driving for which the torque is outputted, the magnet magnetic flux estimation value $K_e$^ can be continuously calculated.

Also in the state in which the torque is turned off and the voltage output of the inverter is stopped, when a configuration is provided in which approximate speed information is captured from the outside of a driving device 1, such as the monitor device of a railway vehicle, the conversion of frequency information on the rotor is performed based on the approximate speed information, and temperature calculation by the heat equivalent circuit using the frequency of the rotor as an input is continued, and thus the magnet temperature is calculated, and fluctuations in the magnet magnetic flux can be estimated.

A configuration may be provided in which the deviation quantity between the temperature estimation value of the magnet based on the estimation value $K_e$^ of the magnet magnetic flux and the magnet temperature estimation value by the heat equivalent circuit is compared using the timing of the update of the magnetic flux estimation value $K_e$^, and the parameters of a thermal resistance, for example, for use in the heat equivalent circuit can be sequentially adjusted during drive control.

As described above, in the seventh embodiment, the calculation function for the magnet temperature by the heat equivalent circuit calculation unit 15 is provided, and thus the magnet magnetic flux estimation value $K_e$^ can be corrected in free run in which the voltage output of the inverter is stopped and in outputting the torque, and further improvement of accuracy of torque can be achieved.

Eighth Embodiment

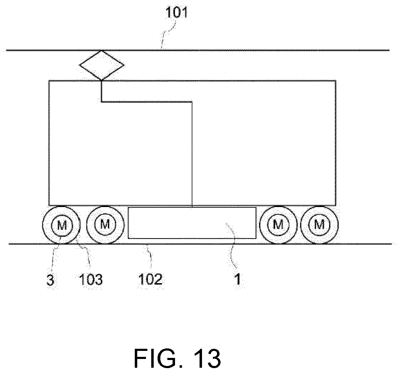

Figure 13 is a diagram showing the schematic configuration of a part of a railway vehicle on which the driving device for the permanent magnet synchronous motor according to any one of the first to the seventh embodiments is mounted, as an eighth embodiment.

In Figure 13, the driving device 1 mounted on the railway vehicle is supplied with electric power from an overhead contact line 101 through a current collector, outputs and supplies alternating-current power to the permanent magnet synchronous motor 3, and thus electric energy is converted into machine torque. The permanent magnet synchronous motor 3 is coupled to the axle of the railway vehicle through a reduction gear, and the railway vehicle runs by tangential force reduced between a wheel 103 connected to the axle and a rail 102.

The eighth embodiment applies the driving device 1 of the permanent magnet synchronous motor according to any one of the first to the seventh embodiments as the driving device 1 that is mounted on the railway vehicle. Accordingly, the improvement of the accuracy of torque outputted by the permanent magnet synchronous motor 3 or the detection of a state abnormality, such as abnormality heat generation in the permanent magnet synchronous motor 3 can be achieved, more accurate traffic operation can be achieved, and a railway vehicle of more excellent reliability can be achieved.

Reference Signs List

1: driving device,
2: voltage generation device,
3: permanent magnet synchronous motor,
4: current detector,

5, 6: coordinate converter,
9: torque command generation unit,
10: current controller,
11: position and speed calculation unit,
12: current command generation unit,
13: magnetic flux estimation unit,
14: update determination unit,
15: heat equivalent circuit calculation unit,
20: stator,
21: stator iron core,
22: stator slot,
23: stator winding,
24: winding retaining member,
25: rotor,
26: magnet,
27: air-gap part,
28: gap,
29: rotor iron core,
30: pulsation magnetic flux due to stator slots,
31: wire,
32: width in the circumferential direction of a stator slot opening,
101: overhead contact line,
102: rail,
103: wheel

**Claims**

1.  A driving device (1) for a permanent magnet synchronous motor (3), the driving device (1) comprising:

    a current command generation unit (12) configured to output a current command value based on a torque command value;
    a voltage command generation unit (10) configured to output a voltage command value for driving a permanent magnet synchronous motor (3) based on the current command value; and
    a magnet information estimation unit (13) configured to estimate a magnetic flux quantity of a magnet (26) or a temperature of a magnet that is included in the permanent magnet synchronous motor (3),
    **characterized in that**
    the driving device (1) is configured to provide a period in which:

    the torque command value is zero before the torque command value is raised, in coasting restart, due to starting a voltage output to the permanent magnet synchronous motor (3) from a state in which a voltage output to the permanent magnet synchronous motor (3) is stopped and the rotor (25) of the permanent magnet synchronous motor (3) is free-run,
    a current command value on a q-axis is set to zero, and
    a current command value on a d-axis is set to a predetermined value other than zero; and

    the magnet information estimation unit (13) is configured, based on the voltage command value and rotation speed information on the permanent magnet synchronous motor (3) in said period, to estimate the magnetic flux quantity of the magnet included in the permanent magnet synchronous motor (3) or the temperature of the magnet.

2.  The driving device (1) for a permanent magnet synchronous motor (3) according to claim 1,
    wherein the driving device (1) includes a function that corrects the current command value corresponding to the torque command value or the torque command value based on the magnetic flux quantity of the magnet or the temperature of the magnet that is estimated.

3.  The driving device (1) for a permanent magnet synchronous motor (3) according to claim 1 or 2,
    wherein the driving device (1) includes a function that detects abnormality heat generation in the permanent magnet synchronous motor (3) or an abnormal state change in the magnetic flux quantity of the magnet based on the magnetic flux quantity of the magnet or the temperature of the magnet that is estimated.

4. The driving device (1) for a permanent magnet synchronous motor (3) according to any one of claims 1 to 3, wherein the magnet information estimation unit (13) includes a function that performs estimation of the magnetic flux quantity of the magnet or the temperature of the magnet when a speed of a rotor of the permanent magnet synchronous motor (3) is a predetermined speed or more.

5. The driving device (1) for a permanent magnet synchronous motor (3) according to any one of claims 1 to 4, wherein the magnet information estimation unit (13) includes a function that estimates the magnetic flux quantity of the magnet at a regular time interval that is a predetermined time interval shorter than a thermal time constant of the permanent magnet synchronous motor (3).

6. The driving device (1) for a permanent magnet synchronous motor (3) according to any one of claims 1 to 5, wherein:

   the driving device includes a storage device; and
   the driving device includes a function that updates the magnetic flux quantity of the magnet or the temperature of the magnet that is estimated at every timing of performing estimation and store the magnetic flux quantity of the magnet or the temperature of the magnet on the storage device.

7. The driving device (1) for a permanent magnet synchronous motor (3) according to any one of claims 1 to 6,

   wherein the driving device (1) is provided with a predetermined period for which driving is performed as the torque command value is zero when the speed of the rotor of the permanent magnet synchronous motor (3) is a predetermined value or more after the torque command value is narrowed to zero; and
   in the period, estimation of the magnetic flux quantity of the magnet or the temperature of the magnet is executed by the magnet information estimation unit (13).

8. The driving device (1) for a permanent magnet synchronous motor (3) according to any one of claims 1 to 7, wherein the magnet information estimation unit (13) includes a function that performs estimation of the magnetic flux quantity of the magnet when a command value of a modulation rate used for drive control over the permanent magnet synchronous motor (3) is a predetermined value or more.

9. The driving device (1) for a permanent magnet synchronous motor (3) according to any one of claims 1 to 8, wherein as an initial value of an estimation value of the magnetic flux quantity of the magnet, a magnetic flux quantity of the magnet is set, the magnetic flux quantity corresponding to a temperature lower than a median value between an upper limit and a lower limit of a specification range of the temperature of the magnet.

10. The driving device (1) for a permanent magnet synchronous motor (3) according to any one of claims 1 to 9, wherein the magnet information estimation unit (13) includes a function that estimates the temperature of the magnet or the magnetic flux quantity of the magnet using a value that an estimation value of the magnetic flux quantity of the magnet is converted into a temperature as an initial value of the temperature of the magnet and using the current command value or a detection value of the electric current and a speed command value of the permanent magnet synchronous motor (3).

11. A driving system for a permanent magnet synchronous motor (3), the driving system comprising:

    the driving device (1) for a permanent magnet synchronous motor (3) according to any one of claims 1 to 10; and
    a permanent magnet synchronous motor (3) driven by the driving device (1),
    wherein a stator slot (22) included in the permanent magnet synchronous motor (3) is an open stator slot in which a width of the stator slot (22) in a circumferential direction at an innermost circumference position is wider than a width of a stator winding (23) in a circumferential direction accommodated in the stator slot (22).

12. A railway vehicle mounted with the driving device (1) for a permanent magnet synchronous motor (3) according to any one of claims 1 to 10 or the driving system for a permanent magnet synchronous motor (3) according to claim 11.

13. A driving method for a permanent magnet synchronous motor (3) driven by the voltage generation device (2) of the driving device (1) of any one of claims 1 to 10, the voltage generation device (2) outputting a voltage waveform in response to a torque command value, wherein the method comprises the steps of:

estimating a temperature of a magnet included in the permanent magnet synchronous motor (3), **characterized by**
providing a period in which:
the torque command value is zero before the torque command value is raised,

in a coasting restart due to starting a voltage output to the permanent magnet synchronous motor (3) from a state in which a voltage output to the permanent magnet synchronous motor (3) is stopped and the rotor of the permanent magnet synchronous motor (3) is free-run, when a voltage command value is adjusted such that based on a current command value, a detection value of an electric current carried through a permanent magnet synchronous motor (3), and rotation speed information on the permanent magnet synchronous motor (3), the detection value of the electric current is matched with a predetermined current command value,
estimating a magnetic flux quantity of a magnet included in the permanent magnet synchronous motor (3) or a temperature of the magnet based on the voltage command value and the rotation speed information in said period in which the torque command value is zero, a current command value on a q-axis is set to zero, and a current command value on a d-axis is set to a predetermined value other than zero; and
correcting the torque command value based on the magnetic flux quantity of the magnet or the temperature of the magnet that is estimated.

14. The driving method for a permanent magnet synchronous motor (3) according to claim 13, wherein the magnetic flux quantity of the magnet or the temperature of the magnet that is estimated is updated at every timing of performing estimation and is stored on a storage device.

15. The driving method for a permanent magnet synchronous motor (3) according to claim 14, wherein the permanent magnet synchronous motor (3) is a railway vehicle permanent magnet synchronous motor (3) .

16. The driving method of claim 15, wherein the estimation value is estimated and updated every convergence waiting time before raising a torque in coasting restart.

17. The driving method of claim 15
wherein:

a control period is provided in which a torque command value is zero when torque is turned off; and
the estimation value is estimated and updated in the control period.

**Patentansprüche**

1. Antriebsvorrichtung (1) für einen Permanentmagnetsynchronmotor (3), wobei die Antriebsvorrichtung (1) Folgendes umfasst:

eine Strombefehlserzeugungseinheit (12), die dazu ausgelegt ist, einen Strombefehlswert beruhend auf einem Drehmomentbefehlswert auszugeben;
eine Spannungsbefehlserzeugungseinheit (10), die dazu ausgelegt ist, einen Spannungsbefehlswert zum Antreiben eines Permanentmagnetsynchronmotors (3) beruhend auf dem Strombefehlswert auszugeben; und
eine Magnetinformationsschätzungseinheit (13), die dazu ausgelegt ist, eine Magnetflussstärke eines Magnets (26) oder eine Temperatur eines Magnets, der im Permanentmagnetsynchronmotor (3) enthalten ist, zu schätzen,
**dadurch gekennzeichnet, dass** die Antriebsvorrichtung (1) dazu ausgelegt ist, eine Zeitspanne bereitzustellen, in der:

der Drehmomentbefehlswert null ist, bevor der Drehmomentbefehlswert bei Schubbetriebwiederanlauf aufgrund des Beginnens einer Spannungsausgabe an den Permanentmagnetsynchronmotor (3) von einem Zustand ausgehend angehoben wird, in dem eine Spannungsausgabe an den Permanentsynchronmotor (3) angehalten wird und der Rotor (25) des Permanentmagnetsynchronmotors (3) freiläuft;

17

ein Strombefehlswert auf einer q-Achse auf null eingestellt ist und

ein Strombefehlswert auf einer d-Achse auf einen voreingestellten anderen Wert als null eingestellt ist; und die Magnetinformationsschätzungseinheit (13) dazu ausgelegt ist, beruhend auf dem Spannungsbefehlswert und Drehzahlinformationen des Permanentmagnetsynchronmotors (3) in der genannten Zeitspanne die Magnetflussstärke des im Permanentmagnetsynchronmotor (3) enthaltenen Magnets oder die Temperatur des Magnets zu schätzen.

2. Antriebsvorrichtung (1) für einen Permanentmagnetsynchronmotor (3) nach Anspruch 1,
wobei die Antriebsvorrichtung (1) eine Funktion umfasst, die den Strombefehlswert entsprechend dem Drehmomentbefehlswert oder dem Drehmomentbefehlswert beruhend auf der geschätzten Magnetflussstärke des Magnets oder Temperatur des Magnets korrigiert.

3. Antriebsvorrichtung (1) für einen Permanentmagnetsynchronmotor (3) nach Anspruch 1 oder 2,
wobei die Antriebsvorrichtung (1) eine Funktion umfasst, die eine abnormale Hitzeentstehung im Permanentmagnetsynchronmotor (3) oder eine abnormale Zustandsveränderung in der Magnetflussstärke des Magnets beruhend auf der geschätzten Magnetflussstärke des Magnets oder Temperatur des Magnets detektiert.

4. Antriebsvorrichtung (1) für einen Permanentmagnetsynchronmotor (3) nach einem der Ansprüche 1 bis 3,
wobei die Magnetinformationsschätzungseinheit (13) eine Funktion umfasst, die eine Schätzung der Magnetflussstärke des Magnets oder der Temperatur des Magnets durchführt, wenn eine Drehzahl des Rotors des Permanentmagnetsynchronmotors (3) einer vorbestimmten Geschwindigkeit oder mehr entspricht.

5. Antriebsvorrichtung (1) für einen Permanentmagnetsynchronmotor (3) nach einem der Ansprüche 1 bis 4,
wobei die Magnetinformationsschätzungseinheit (13) eine Funktion umfasst, die die Magnetflussstärke des Magnets in einem regelmäßigen Zeitintervall schätzt, das ein vorbestimmtes Zeitintervall ist, welches kürzer ist als eine thermische Zeitkonstante des Permanentmagnetsynchronmotors (3).

6. Antriebsvorrichtung (1) für einen Permanentmagnetsynchronmotor (3) nach einem der Ansprüche 1 bis 5,
wobei:

die Antriebsvorrichtung eine Speichervorrichtung umfasst; und
die Antriebsvorrichtung eine Funktion umfasst, die die Magnetflussstärke des Magnets oder die Temperatur des Magnets zu jedem Zeitpunkt der Durchführung einer Schätzung aktualisiert und die Magnetflussstärke des Magnets oder die Temperatur des Magnets auf der Speichervorrichtung speichert.

7. Antriebsvorrichtung (1) für einen Permanentmagnetsynchronmotor (3) nach einem der Ansprüche 1 bis 6,

wobei die Antriebsvorrichtung (1) mit einer vorbestimmten Zeitspanne bereitgestellt ist, für die Antreiben durchgeführt wird, während der Drehmomentbefehlswert null ist, wenn die Drehzahl des Rotors des Permanentmagnetsynchronmotors (3) ein vorbestimmter Wert oder mehr ist, nachdem der Drehmomentbefehl auf null gesenkt wurde; und
in der genannten Zeitspanne die Schätzung der Magnetflussstärke des Magnets oder der Temperatur des Magnets durch die Magnetinformationsschätzungseinheit (13) ausgeführt wird.

8. Antriebsvorrichtung (1) für einen Permanentmagnetsynchronmotor (3) nach einem der Ansprüche 1 bis 7,
wobei die Magnetinformationsschätzungseinheit (13) eine Funktion umfasst, die eine Schätzung der Magnetflussstärke des Magnets durchführt, wenn ein Befehlswert einer Modulationsrate, der zur Antriebssteuerung über den Permanentmagnetsynchronmotor (3) verwendet wird, einem vorbestimmten Wert oder mehr entspricht.

9. Antriebsvorrichtung (1) für einen Permanentmagnetsynchronmotor (3) nach einem der Ansprüche 1 bis 8,
wobei als Ausgangswert eines Schätzwerts der Magnetflussstärke des Magnets eine Magnetflussstärke des Magnets eingestellt ist, wobei die Magnetflussstärke einer Temperatur entspricht, die unter einem Medianwert zwischen einer Obergrenze und einer Untergrenze eines Spezifikationsbereichs der Temperatur des Magnets entspricht.

10. Antriebsvorrichtung (1) für einen Permanentmagnetsynchronmotor (3) nach einem der Ansprüche 1 bis 9,
wobei die Magnetinformationsschätzungseinheit (13) eine Funktion umfasst, die die Temperatur des Magnets oder die Magnetflussstärke des Magnets unter Verwendung eines Werts, der ein Schätzwert der Magnetflussstärke des Magnets konvertiert in eine Temperatur als Ausgangswert der Temperatur des Magnets ist, und unter Verwendung des Strombefehlswerts oder eines Detektionswerts des elektrischen Stroms und eines Drehzahlbefehlswerts des Permanentsynchronmotors (3) schätzt.

11. Antriebssystem für einen Permanentmagnetsynchronmotor (3), wobei das Antriebssystem Folgendes umfasst:

   eine Antriebsvorrichtung (1) für einen Permanentmagnetsynchronmotor (3) nach einem der Ansprüche 1 bis 10; und
   einen von der Antriebsvorrichtung (1) angetriebenen Permanentmagnetsynchronmotor (3),
   wobei ein im Permanentmagnetsynchronmotor (3) enthaltener Statorschlitz (22) ein offener Statorschlitz ist, bei dem eine Breite des Statorschlitzes (22) in Umfangsrichtung in einer innersten Umfangsposition breiter ist als die Breite einer Statorwicklung (23) in Umfangsrichtung, die im Statorschlitz (22) aufgenommen ist.

12. Schienenfahrzeug, das mit einer Antriebsvorrichtung (1) für einen Permanentmagnetsynchronmotor (3) nach einem der Ansprüche 1 bis 10 oder einem Antriebssystem für einen Permanentmagnetsynchronmotor (3) nach Anspruch 11 montiert ist.

13. Antriebsverfahren für einen Permanentmagnetsynchronmotor (3), der durch eine Spannungserzeugungsvorrichtung (2) einer Antriebsvorrichtung (1) nach einem der Ansprüche 1 bis 10 angetrieben wird, wobei die Spannungserzeugungsvorrichtung (2) eine Spannungswellenform als Antwort auf einen Drehmomentbefehlswert ausgibt, wobei das Verfahren folgende Schritte umfasst;

   Schätzen einer Temperatur eines im Permanentmagnetsynchronmotors (3) enthaltenen Magnets, **gekennzeichnet durch**:

      Bereitstellen einer Zeitspanne, in der der Drehmomentbefehlswert null ist, bevor der Drehmomentbefehlswert bei Schubbetriebwiederanlauf aufgrund des Beginnens einer Spannungsausgabe für den Permanentmagnetsynchronmotor (3) von einem Zustand ausgehend angehoben wird, in dem eine Spannungsausgabe für den Permanentsynchronmotor (3) angehalten wird und der Rotor des Permanentmagnetsynchronmotors (3) freiläuft, wenn ein Spannungsbefehlswert beruhend auf einem Strombefehlswert, einem Detektionswert eines elektrischen Stroms, der durch einen Permanentmagnetsynchronmotor (3) verläuft, und Drehzahlinformationen des Permanentmagnetsynchronmotors (3) angepasst wird, wobei der Detektionswert des elektrischen Stroms auf einen vorbestimmten Strombefehlswert abgestimmt wird,
      Schätzen einer Magnetflussstärke eines im Permanentmagnetsynchronmotor (3) enthaltenen Magnets oder einer Temperatur des Magnets beruhend auf dem Spannungsbefehlswert und den Drehzahlinformationen in der genannten Zeitspanne, in der der Drehmomentbefehlswert null ist, ein Strombefehlswert auf einer q-Achse auf null eingestellt wird und ein Strombefehlswert auf einer d-Achse auf einen vorbestimmten anderen Wert als null eingestellt wird; und
      Korrigieren des Drehmomentbefehlswerts beruhend auf der geschätzten Magnetflussstärke des Magnets oder Temperatur des Magnets.

14. Antriebsverfahren für einen Permanentmagnetsynchronmotor (3) nach Anspruch 13, wobei die geschätzten Magnetflussstärke des Magnets oder Temperatur des Magnets zu jedem Zeitpunkt der Durchführung einer Schätzung aktualisiert und auf einer Speichervorrichtung gespeichert wird.

15. Antriebsverfahren für einen Permanentmagnetsynchronmotor (3) nach Anspruch 14, wobei der Permanentmagnetsynchronmotor (3) ein Schienenfahrzeug-Permanentmagnetsynchronmotor (3) ist.

16. Antriebsverfahren nach Anspruch 15, wobei der Schätzwert in jeder Konvergenzwartezeit vor dem Anheben eines Drehmoments bei Schubbetriebwiederanlauf geschätzt und aktualisiert wird.

17. Antriebsverfahren nach Anspruch 15, wobei:

   eine Steuerzeitspanne bereitgestellt wird, in der ein Drehmomentbefehlswert null ist, wenn das Drehmoment ausgeschaltet ist; und
   der Schätzwert in der Steuerzeitspanne geschätzt und aktualisiert wird.

**Revendications**

1.  Dispositif d'entraînement (1) pour un moteur synchrone à aimants permanents (3), le dispositif d'entraînement (1) comprenant :

    une unité de génération de commande de courant (12) configurée pour délivrer en sortie une valeur de commande de courant basée sur une valeur de commande de couple ;
    une unité de génération de commande de tension (10) configurée pour délivrer en sortie une valeur de commande de tension pour entraîner un moteur synchrone à aimants permanents (3) sur la base de la valeur de commande de courant ; et
    une unité d'estimation d'informations d'aimant (13) configurée pour estimer une quantité de flux magnétique d'un aimant (26) ou une température d'un aimant qui est inclus dans le moteur synchrone à aimants permanents (3),
    **caractérisé en ce que**
    le dispositif d'entraînement (1) est configuré pour fournir une période dans laquelle :

    la valeur de commande de couple est de zéro avant que la valeur de commande de couple ne soit augmentée, lors d'un redémarrage en roue libre, en raison du démarrage d'une tension délivrée au moteur synchrone à aimants permanents (3) à partir d'un état dans lequel une tension délivrée au moteur synchrone à aimants permanents (3) est interrompue et le rotor (25) du moteur synchrone à aimants permanents (3) est en marche libre,
    une valeur de commande de courant sur un axe q est fixée à zéro, et
    une valeur de commande de courant sur un axe d est fixée à une valeur prédéterminée autre que zéro ; et

    l'unité d'estimation d'informations d'aimant (13) est configurée, sur la base de la valeur de commande de tension et d'informations de vitesse de rotation sur le moteur synchrone à aimants permanents (3) dans ladite période, pour estimer la quantité de flux magnétique de l'aimant inclus dans le moteur synchrone à aimants permanents (3) ou la température de l'aimant.

2.  Dispositif d'entraînement (1) pour un moteur synchrone à aimants permanents (3) selon la revendication 1, dans lequel le dispositif d'entraînement (1) inclut une fonction qui corrige la valeur de commande de courant correspondant à la valeur de commande de couple ou à la valeur de commande de couple sur la base de la quantité de flux magnétique de l'aimant ou de la température de l'aimant qui est estimée.

3.  Dispositif d'entraînement (1) pour un moteur synchrone à aimants permanents (3) selon la revendication 1 ou 2, dans lequel le dispositif d'entraînement (1) inclut une fonction qui détecte une génération de chaleur anormale dans le moteur synchrone à aimants permanents (3) ou un changement d'état anormal dans la quantité de flux magnétique sur la base de la quantité de flux magnétique de l'aimant ou de la température de l'aimant qui est estimée.

4.  Dispositif d'entraînement (1) pour un moteur synchrone à aimants permanents (3) selon l'une quelconque des revendications 1 à 3, dans lequel l'unité d'estimation d'informations d'aimant (13) inclut une fonction qui réalise l'estimation de la quantité de flux magnétique de l'aimant ou de la température de l'aimant lorsqu'une vitesse d'un rotor du moteur synchrone à aimants permanents (3) est une vitesse supérieure ou égale à une vitesse prédéterminée.

5.  Dispositif d'entraînement (1) pour un moteur synchrone à aimants permanents (3) selon l'une quelconque des revendications 1 à 4, dans lequel l'unité d'estimation d'informations d'aimant (13) inclut une fonction qui estime la quantité de flux magnétique de l'aimant à intervalle de temps régulier qui est un intervalle de temps prédéterminé plus court qu'une constante de temps thermique du moteur synchrone à aimants permanents (3).

6.  Dispositif d'entraînement (1) pour un moteur synchrone à aimants permanents (3) selon l'une quelconque des revendications 1 à 5, dans lequel :

    le dispositif d'entraînement inclut un dispositif de stockage ; et
    le dispositif d'entraînement inclut une fonction qui actualise la quantité de flux magnétique de l'aimant ou la température de l'aimant qui est estimée à chaque moment de réalisation d'estimation et stocke la quantité de flux magnétique de l'aimant ou la température de l'aimant sur le dispositif de stockage.

7. Dispositif d'entraînement (1) pour un moteur synchrone à aimants permanents (3) selon l'une quelconque des revendications 1 à 6,

dans lequel le dispositif d'entraînement (1) est pourvu d'une période prédéterminée pour laquelle l'entraînement est réalisé lorsque la valeur de commande de couple est de zéro lorsque la vitesse du rotor du moteur synchrone à aimants permanents (3) est supérieure ou égale à une valeur prédéterminée après que la valeur de commande de couple est réduite à zéro ; et

dans la période, l'estimation de la quantité de flux magnétique de l'aimant ou la température de l'aimant est exécutée par l'unité d'estimation d'informations d'aimant (13) .

8. Dispositif d'entraînement (1) pour un moteur synchrone à aimants permanents (3) selon l'une quelconque des revendications 1 à 7,

dans lequel l'unité d'estimation d'informations d'aimant (13) inclut une fonction qui réalise une estimation de la quantité de flux magnétique de l'aimant lorsqu'une valeur de commande d'une vitesse de modulation utilisée pour une commande d'entraînement sur le moteur synchrone à aimants permanents (3) est une valeur supérieure ou égale à une valeur prédéterminée.

9. Dispositif d'entraînement (1) pour un moteur synchrone à aimants permanents (3) selon l'une quelconque des revendications 1 à 8,

dans lequel en tant que valeur initiale d'une valeur d'estimation de la quantité de flux magnétique de l'aimant, une quantité de flux magnétique de l'aimant est fixée, la quantité de flux magnétique correspondant à une température inférieure à une valeur médiane entre une limite supérieure et une limite inférieure d'une plage de spécification de la température de l'aimant.

10. Dispositif d'entraînement (1) pour un moteur synchrone à aimants permanents (3) selon l'une quelconque des revendications 1 à 9,

dans lequel l'unité d'estimation d'informations d'aimant (13) inclut une fonction qui estime la température de l'aimant ou la quantité de flux magnétique de l'aimant en utilisant une valeur où une valeur d'estimation de la quantité de flux magnétique de l'aimant est convertie en une température en tant que valeur initiale de la température de l'aimant et en utilisant la valeur de commande de courant ou une valeur de détection du courant électrique et une valeur de commande de vitesse du moteur synchrone à aimants permanents (3).

11. Système d'entraînement pour un moteur synchrone à aimants permanents (3), le système d'entraînement comprenant :

le dispositif d'entraînement (1) pour un moteur synchrone à aimants permanents (3) selon l'une quelconque des revendications 1 à 10 ; et

un moteur synchrone à aimants permanents (3) entraîné par le dispositif d'entraînement (1),

dans lequel une fente de stator (22) incluse dans le moteur synchrone à aimants permanents (3) est une fente de stator ouverte dans laquelle une largeur de la fente de stator (22) dans une direction circonférentielle au niveau d'une position de circonférence la plus intérieure est plus large qu'une largeur d'un enroulement de stator (23) dans une direction circonférentielle logé dans la fente de stator (22).

12. Véhicule ferroviaire sur lequel est monté le dispositif d'entraînement (1) pour un moteur synchrone à aimants permanents (3) selon l'une quelconque des revendications 1 à 10 ou le système d'entraînement pour un moteur synchrone à aimants permanents (3) selon la revendication 11.

13. Procédé d'entraînement pour un moteur synchrone à aimants permanents (3) entraîné par le dispositif de génération de tension (2) du dispositif d'entraînement (1) selon l'une quelconque des revendications 1 à 10, le dispositif de génération de tension (2) délivrant en sortie une forme d'onde de tension en réponse à une valeur de commande de couple, dans lequel le procédé comprend les étapes suivantes :

l'estimation d'une température d'un aimant inclus dans le moteur synchrone à aimants permanents (3), **caractérisé par**

la fourniture d'une période dans laquelle :

la valeur de commande de couple est de zéro avant que la valeur de commande de couple ne soit augmentée, lors d'un redémarrage en roue libre en raison du démarrage d'une tension délivrée au moteur synchrone à aimants permanents (3) à partir d'un état dans lequel une tension délivrée au moteur synchrone à aimants permanents (3) est interrompue et le rotor du moteur synchrone à aimants permanents (3) est en marche libre, lorsqu'une valeur de commande de tension est ajustée de telle sorte que, sur la base d'une valeur de commande de courant, d'une valeur de détection d'un courant électrique transporté à travers un moteur synchrone à aimants permanents (3) et d'informations de vitesse de rotation sur le moteur synchrone à aimants permanents (3), la valeur de détection du courant électrique est mise en correspondance avec une valeur de commande de courant prédéterminée,

l'estimation d'une quantité de flux magnétique d'un aimant inclus dans le moteur synchrone à aimants permanents (3) ou d'une température de l'aimant sur la base d'une valeur de commande de tension et d'informations de vitesse de rotation dans ladite période dans laquelle la valeur de commande de couple est de zéro, une valeur de commande de courant sur un axe q est fixée à zéro, et une valeur de commande de courant sur un axe d est fixée à une valeur prédéterminée autre que zéro ; et

la correction de la valeur de commande de couple sur la base de la quantité de flux magnétique de l'aimant ou de la température de l'aimant qui est estimée.

14. Procédé d'entraînement pour un moteur synchrone à aimants permanents (3) selon la revendication 13, dans lequel la quantité de flux magnétique de l'aimant ou la température de l'aimant qui est estimée est actualisée à chaque moment de réalisation d'estimation et est stockée sur un dispositif de stockage.

15. Procédé d'entraînement pour un moteur synchrone à aimants permanents (3) selon la revendication 14, dans lequel le moteur synchrone à aimants permanents (3) est un moteur synchrone à aimants permanents (3) de véhicule ferroviaire.

16. Procédé d'entraînement selon la revendication 15, dans lequel la valeur d'estimation est estimée et actualisée à chaque moment d'attente de convergence avant l'augmentation d'un couple lors d'un redémarrage en roue libre.

17. Procédé d'entraînement selon la revendication 15 dans lequel :

une période de contrôle est prévue dans laquelle une valeur de commande de couple est de zéro lorsque le couple est désactivé ; et

la valeur d'estimation est estimée et actualisée dans la période de contrôle.

# FIG. 1

EP 3 809 582 B1

FIG. 2

q-axis

$v$

$v_q = \omega K_e$

d-axis

$\phi_m (K_e)$

FIG. 3

FIG. 4

FIG. 5

(a) Ideal waveform of back electromotive force

(b) Back electromotive force waveform including harmonic components

FIG. 6

FIG. 7

# FIG. 8

Motor drive start

Has the prescribed time passed since the previous constant estimation?

Motor drive continue?

Motor drive stop

YES

NO

YES

NO

Mode to zero current command

Estimation of magnetic flux constant

Write the magnetic flux constant to storage device

Read the magnetic flux constant from storage device

Compensation of torque command

Mode to torque output

EP 3 809 582 B1

FIG. 9

Ke^ estimation

Gate off

| Condition | Normal Drive mode (Regeneration) | Zero-torque control | Free-run |

fr

0 → Time

Id*

0 → Time

Iq*

0 → Time

0 → Time

Tₘ

FIG. 10

# FIG. 11

## FIG. 12

EP 3 809 582 B1

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002267727 A
- JP 5726273 B
- EP 2472716 A1
- US 2011144843 A